(19) Europäisches Patentamt

European Patent Office

Office européen des brevets

(11) **EP 0 630 786 B1**

(12) **EUROPÄISCHE PATENTSCHRIFT**

(45) Veröffentlichungstag und Bekanntmachung des Hinweises auf die Patenterteilung:
**09.10.1996 Patentblatt 1996/41**

(51) Int. Cl.$^6$: **B60T 8/00**, G01N 19/02

(21) Anmeldenummer: 93109953.5

(22) Anmeldetag: **22.06.1993**

(54) **Verfahren und Schaltungsanordnung zum Ermitteln des Reibwerts**

Process and circuit for determining the friction value

Procédé et circuit pour relever la valeur de frottement

(84) Benannte Vertragsstaaten:
**DE FR GB IT**

(43) Veröffentlichungstag der Anmeldung:
**28.12.1994 Patentblatt 1994/52**

(73) Patentinhaber: **SIEMENS AKTIENGESELLSCHAFT**
**80333 München (DE)**

(72) Erfinder:
• **Kiencke, Uwe, Prof.Dr.**
**D-8400 Regensburg (DE)**
• **Daiss, Armin, Dipl.-Ing.**
**D-76185 Karlsruhe (DE)**
• **Probst, Gregor, Dipl.-Ing.**
**D-8300 Landshut (DE)**

(56) Entgegenhaltungen:
**EP-A- 0 219 023          WO-A-89/03780**
**DE-A- 3 833 211**

• **RESEARCH DISCLOSURE Bd. 270, Nr. 072 , 10. Oktober 1986 , HAVANT GB Seiten 633 - 634 ANONYMOUS 'Estimation of Road Surface Coefficient of Friction'**

**Beschreibung**

Die Erfindung betrifft ein Verfahren und eine Schaltungsanordnung nach dem Oberbegriff der Ansprüche 1 bzw. 8. Sie dient zum Ermitteln des Reibwerts zwischen einem Kraftfahrzeugreifen und der Oberfläche einer Fahrbahn. Bei genauer Kenntnis dieses Reibwerts können Antiblockiersysteme besonders präzise geregelt werden. Auch für Antischlupfregel-, Vierradlenk-, Fahrerinformations- und Schlechtwegerkennungssysteme kann die genaue Kenntnis des Reibwerts nützlich sein.

Bei einem bekannten Reibwertermittlungs-System erfassen Sensoren den Lenkwinkel, das Lenkmoment und die Fahrzeuggeschwindigkeit. Ein Prozessor verarbeitet die drei Sensorsignale und liest aus einer Tabelle einen Reibwert aus, der den drei Signalen zugeordnet ist (EP 0 323 066 B1). Das Lenkmoment zu messen ist aufwendig, außerdem hängt der Reibwert auch von anderen Größen als den durch die drei Sensoren gemessenen Fahrparamentern ab.

Bei einer weiteren bekannten Vorrichtung wird der von der Fahrzeugquerdynamik abhängige Reibwert mit einer Formel berechnet, die von einem Kräftegleichgewicht an den Rädern abgeleitet wird. Dazu werden die Signale von Sensoren für die Seitenbeschleunigung, den Lenkwinkel der Vorder- und der Hinterräder und der Fahrzeuggeschwindigkeit und der Inhalt eines Speichers für Stabilitätsfaktoren, wie die Fahrzeugmasse, die Abstände zwischen dem Schwerpunkt und der Vorder- sowie der Hinterachse, die Kurvenkräfte auf die Vorder- und die Hinterräder und das Giermoment ausgewertet (EP 0 312 096 B1). Auch hier ist der Aufwand, insbesondere für die Sensoren, recht hoch und es ist nicht vorgesehen, den berechneten Reibwert für eine Antiblockierregelung zu verwenden.

Bei einem Verfahren zur fortlaufenden Bestimmung des Kraftschlußbeiwerts erfolgt eine laufende Bestimmung des Fahrbahnreibwertes über eine Messung der Raddrehgeschwindigkeiten und des Motordrehmoments und durch Schätzen von Parametern von Bestimmungsgleichungen. Mit den Schätzwerten, mehreren Konstanten und den Radgeschwindigkeiten wird der Reibwert oder die aktuelle Steigung der $\mu$-Schlupfkurve bestimmt (WO 89/03780).

In einer Veröffentlichung (Research Disclosure, Band 270, Nr. 072, 10. Oktober 1986, HAVANT GB, Seiten 633 bis 634) werden zwei numerische Schätzmethoden dargestellt. Anhand des Radschlupfes, des Bremsdruckes und der Fahrzeugverzögerung wird die Gestalt der $\mu = \mu$(Schlupf)-Kurve bestimmt und dann der optimale Radschlupf ermittelt.

Der Erfindung liegt die Aufgabe zugrunde, den veränderlichen Reibwert zwischen dem Kraftfahrzeugreifen und der Fahrbahn mit geringem Aufwand möglichst genau zu bestimmen. Der Reibwert soll eine verbesserte Radbrems- und Radschlupfregelung ermöglichen.

Die Aufgabe wird erfindungsgemäß durch das Verfahren nach Anspruch 1 und die Schaltungsanordnung nach Anspruch 7 gelöst. Zweckmäßige Weiterbildungen der Erfindung sind in den Unteransprüchen niedergelegt.

Die Vorteile der Erfindung liegen unter anderem darin, daß der Reibwert mit bewährten und effektiven Schätzalgorithmen ermittelt wird, die hier so ausgestaltet sind, daß sich der Rechenaufwand und der Speicherbedarf in Grenzen halten.

Ausführungsbeispiele der Erfindung werden im folgenden anhand der Zeichnung erläutert. Es zeigen:

Figur 1      ein Kraftfahrzeug mit einem Antiblockiersystem, das mit einer erfindungsgemäßen Reibwertermittlungssystem versehen ist, in schematischer Darstellung,

Figur 2      eine Diagrammdarstellung der Reibwerte verschiedener Straßenbelege in Abhängigkeit von dem Schlupf,

Figur 3      ein Ein-Rad-Modell für die erfindungsgemäße Reibwertermittlung,

Figur 4      den zeitlichen Verlauf eines erfindungsgemäß ermittelten Reibwerts, und

Figur 5      eine dreidimensionale Darstellung einer erfindungsgemäß ermittelten Reibcharakteristik in Abhängigkeit von der Zeit und dem Schlupf.

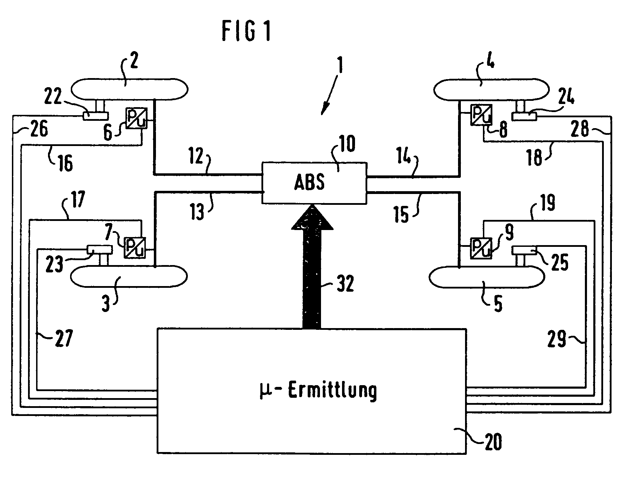

Ein nur schematisch angedeutetes Kraftfahrzeug 1 (Figur 1) weist zwei Vorderräder 2 und 3 sowie zwei Hinterräder 4 und 5 auf. Diese Räder sind mit (z.B. an den Radbremszylindern oder an den Bremsleitungen angeordneten) Bremsdrucksensoren 6 bis 9 versehen, die von dem Hydraulikblock 10 eines Antiblockier-Steuergeräts (ABS) über Hydraulikleitungen 12 bis 15 mit geregeltem Druck versorgt werden.

Die Bremsdrucksensoren 6 bis 9 setzen den an dem jeweiligen Rad herrschenden Bremsdruck **p** in ein elektrisches Spannungssignal **u** um. Die Spannungssignale **u** gelangen über Signalleitungen 16 bis 19 zu einer elektronischen Auswerteschaltung 20 und werden dort in noch zu beschreibender Weise ausgewertet. Die Auswerteschaltung 20 ist Bestandteil eines - hier nicht getrennt dargestellten - Antiblockiersystem-Steuergeräts, das den Bremsdruck für die einzelnen Räder getrennt regelt (möglich ist es auch, jedes Vorderrad mit einem getrennt geregelten Bremsdruck und die beiden Hinterräder mit einem weiteren geregelten gemeinsamen Bremsdruck zu versorgen).

An den Rädern 2 bis 5 angeordnete Drehzahlsensoren 22 bis 25 liefern über Leitungen 26 bis 29 elektrische Signale, die der jeweiligen Raddrehzahl proportional sind, an die Auswerteschaltung 20. Aus diesen Raddrehzahl-Signalen werden die Winkelbeschleunigung $\dot{\omega}$ der Räder, die Geschwindigkeit $\dot{x}_A$ des Kraftfahrzeuges und der Radschlupf s berechnet. Einzelheiten der in der Auswerteschaltung 20 durchgeführten Auswertungen werden nachfolgend beschrieben.

Basierend auf diesen Auswertungen werden durch die Auswerteschaltung 20 Ausgangssignale erzeugt, die über einen Bus 32 dem Ventilblock 10 zugeführt werden. Dieser führt daraufhin den einzelnen Räder 2 bis 5 den Bremsdruck derart zu, daß die Bremskräfte radselektiv äußerst effektiv von den Räder auf die Fahrbahn übertragen werden und dabei das Kraftfahrzeug stabil bleibt oder gegebenenfalls stabilisiert wird und seine Lenkfähigkeit erhalten bleibt.

Die Antriebs- und Bremskräfte eines Kraftfahrzeugs werden durch die Reibkraft $F_R$ zwischen der Reifenumfangsfläche eines Rades und der Oberfläche der Fahrbahn übertragen. Die Reibkraft wird radselektiv, auch von der auf das einzelne Rad einwirkenden Last abhängig übertragen. Sie läßt sich wie folgt berechnen:

$$F_R = \mu^* F_Z \qquad (1)$$

Hierin ist $F_Z$ die senkrecht auf die Fahrbahn wirkende Kraft, die dem Anteil der Fahrzeugmasse entspricht, die von einem Rad getragen wird. $\mu$ ist der Reibwert oder Reibungskoeffizient, der im wesentlichen von dem Material, der Struktur und dem Zustand der Fahrbahn abhängt. Er variiert in einem weiten Bereich, z.B. zwischen einer trockenen Asphaltfahrbahn und einer nässenden Eisschicht auf der Fahrbahn. Er wird hier auch radselektiv, d.h. für jedes Rad getrennt, ermittelt, da sich zum einen die Räder eines Kraftfahrzeugs bekanntlich auf Fahrbahnstellen mit sehr unterschiedlicher Haftfähigkeit befinden können und da zum anderen auch die Laufflächen der einzelnen Reifen einen unterschiedlichen Zustand aufweisen können.

Eine Reibkraft kann nur durch einen Radschlupf s

$$s = 1 - \frac{\omega r_R}{\dot{x}_A} \qquad (2)$$

aufgebaut werden, der als die relative Differenz zwischen der Fahrzeuggeschwindigkeit $\dot{x}_A$ und der Raddrehgeschwindigkeit $\omega$ mal dem Rollradius $r_R$ des Rades definiert ist.

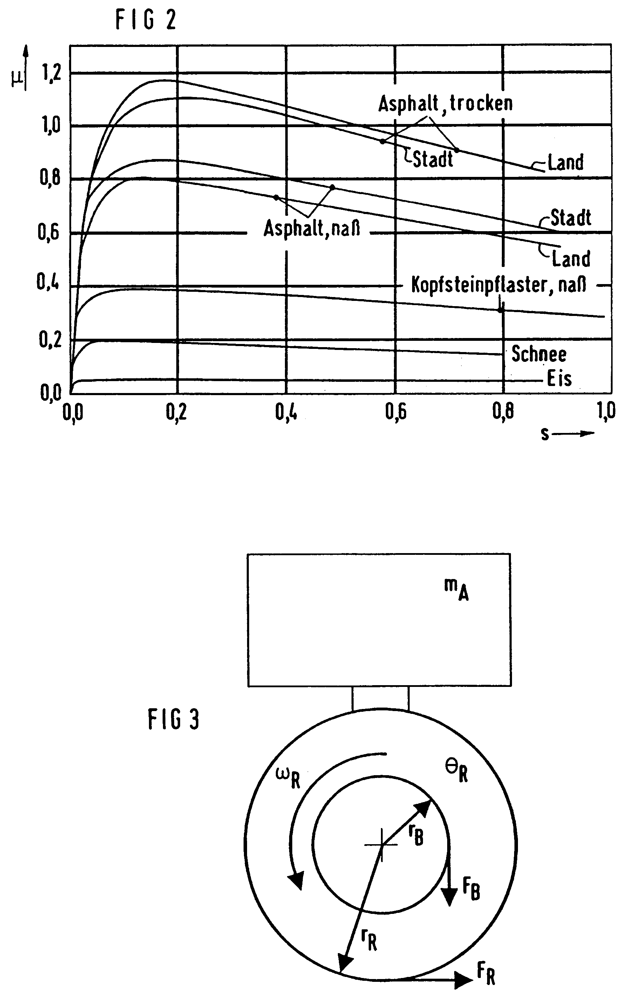

Messungen des Reibwerts $\mu(s)$ als Funktion des Radschlupfes s für verschiedene Fahrbahnoberflächen sind aus der Literatur bekannt (Figur 2). Alle in diesem Diagramm dargestellten Kurven beginnen bei dem Punkt $\mu = 0$ für $s = 0$ und steigen dann bis zu ihrem jeweiligen Maximum an, das bei einem Radschlupf von etwa $s = 0,005...0,25$ liegt. Danach nimmt der Reibwert $\mu$ ab, wobei ein Übergang von der für die Kraftübertragung wesentlichen Haftreibung zu der Gleitreibung erfolgt.

Mit einem Antiblockiersystem wird der Bremsweg eines Kraftfahrzeugs verkürzt und gleichzeitig seine Lenkfähigkeit erhalten. Dazu wird die Drehgeschwindigkeit $\omega$ der einzelnen Räder gemessen und durch Differenzieren die Winkelbeschleunigung oder -verzögerung des Rades $\dot{\omega}$ berechnet. Mit zunehmenden Bremsdruck p nimmt der Radschlupf s zu und es wird das Maximum des Reibwerts $\mu$ (s) überschritten. Nach dem Maximum ändert sich das Vorzeichen der Steigung der Reibwertkurve, und das führt zu einer Instabilität der ABS-Regelschleife. Ein beginnendes Blockieren des Rades kann aus einem starken Ansteigen der Radverzögerung erkannt werden. Ein starkes Ansteigen der Radverzögerungssignale bewirkt, daß das ABS-Steuergerät den Bremsdruck p verringert. Wenn daraufhin die Radverzögerung wieder abnimmt, erhöht das Steuergerät wieder den Bremsdruck. Die sich dabei ergebenden zyklischen Änderungen des Bremsdruckes bewirken, daß der Reibwert im Bereich seines Maximums gehalten wird, womit kurze Bremswege erreicht werden.

Andererseits nehmen die seitlichen Führungskräfte an dem Reifen mit zunehmendem Radschlupf ab, wodurch die Lenkbarkeit verringert wird. Deshalb wird als zusätzliche Bedingung der Radschlupf auf einen Maximalwert von etwa $s \leq 0,25$ beschränkt. Bekannte Antiblockiersysteme sind nach Erfahrungswerten ausgelegt. Die hier beschriebene Ermittlung der Reibcharakteristik $\mu = \mu(s)$, d.h. der Abhängigkeit des Reibwertes von dem Radschlupf, ermöglicht es, da sie in Echtzeit durchgeführt werden kann, die Antiblockierregelung zu systematisieren.

Die Ermittlung oder Schätzung des Reibwerts basiert auf einem Ein-Rad-Modell, das aus Figur 3 ersichtlich ist. Zusätzlich zu den bereits erwähnten Größen sind in dieser Figur noch dargestellt: der Anteil $m_A$ der Fahrzeugmasse, der von diesem einen Rad getragen wird, das Massenträgheitsmoment $\Theta_R$ des Rades, das Bremsradius $r_B$ und die Bremskraft $F_B$.

Die Reibkraft $F_R$ verzögert die Fahrzeuggeschwindigkeit wie folgt:

$$-m_A \ddot{x}_A = F_R \,, \qquad (3)$$

wobei die Differenz zwischen dem Brems- und dem Reibungsmoment die Raddrehung wie folgt verzögert:

$$\Theta_R \dot{\omega}_R = F_B \cdot r_B - F_R \cdot r_R \qquad (4)$$

Die Reibkraft ergibt sich aus:

$$F_R = \mu(s) F_Z = \mu(s) \cdot m_A \cdot g \qquad (5)$$

Mit einem Reibwert $\mu_B$ an der Bremsscheibe oder -backe kann die Bremskraft wie folgt ausgedrückt werden:

$$F_B = \mu_B \cdot p_B \cdot A_B \qquad (6)$$

worin $p_B$ der Bremsdruck und $A_B$ die wirksame Druckfläche des Bremsbelages auf der Bremssscheibe oder -trommel ist. Somit ergeben sich folgende Systemgleichungen für das Ein-Rad-Modell:

$$\ddot{x}_A(t) \doteq -g \cdot \mu(s(t)), \qquad (7)$$

$$\dot{\omega}_R(t) = \frac{m_A \cdot g \cdot r_R}{\Theta_R} \mu(s(t)) - \frac{\mu_B A_B r_B}{\Theta_R} p_B(t)$$

Die Radgeschwindigkeiten werden üblicherweise durch aufeinanderfolgende induktive Abtastwerte gemessen. Die Zeitintervalle zwischen den Abtastwerten verändern sich mit der Drehgeschwindigkeit. Aus Vereinfachungsgründen wird hier eine konstante Abtastzeit $T_A = 10$ ms gewählt. Damit ergibt sich folgende diskrete Beschreibung des Ein-Rad-Modells.

$$\frac{\omega_R(n)-\omega_R(n-1)}{T_A}+\frac{\mu_B A_B r_B}{\Theta_R}p_B(n)=\frac{m_A g r_R}{\Theta_R}\mu(n) \quad (8)$$

Die Raddrehgeschwindigkeit $\omega_R(n)$ und der Bremsdruck $p_B(n)$ werden laufend gemessen. Dabei ist $n$ der Zählindex für die aufeinanderfolgenden Messungen. Der tatsächliche Reibwert $\mu(n)$ wird mit einem rekursiven Schätzalgorithmus nach der Methode der kleinsten Quadrate - in der Literatur als RLS-Verfahren beschrieben - ermittelt. Mit einer Meßvariable $y(n)$

$$y(n)=\frac{\omega_R(n)-\omega_R(n-1)}{T_A}+\frac{\mu_B A_B r_B}{\Theta_R}p_B(n) \quad (9)$$

und einem Fahrzeugparameter $X$

$$X = \frac{m_A g r_R}{\Theta_R} \quad (10)$$

ergibt sich folgender rekursiver Schätzalgorithmus:

$$\hat{\mu}(n)=\hat{\mu}(n-1)+k(n)(y(n)-X^*\hat{\mu}(n-1)) \quad (11)$$

mit einem Fehlerrückführungs-Verstärkungsfaktor k(n)

$$k(n)=\frac{1}{1+X^2 P(n-1)}X^* P(n-1) , \quad (12)$$

worin die $P(n-1)$ die Kovarianz des Schätzfehlers ist

$$P(n-1)=10^{q}*(y(n-1)-X^*\hat{\mu}(n-1))^2 . \quad (13)$$

Hierin ist $q$ eine vorgebbare Zahl ist, die z.B. die Werte $q$ = 2, 3, ..., 8 annehmen kann.

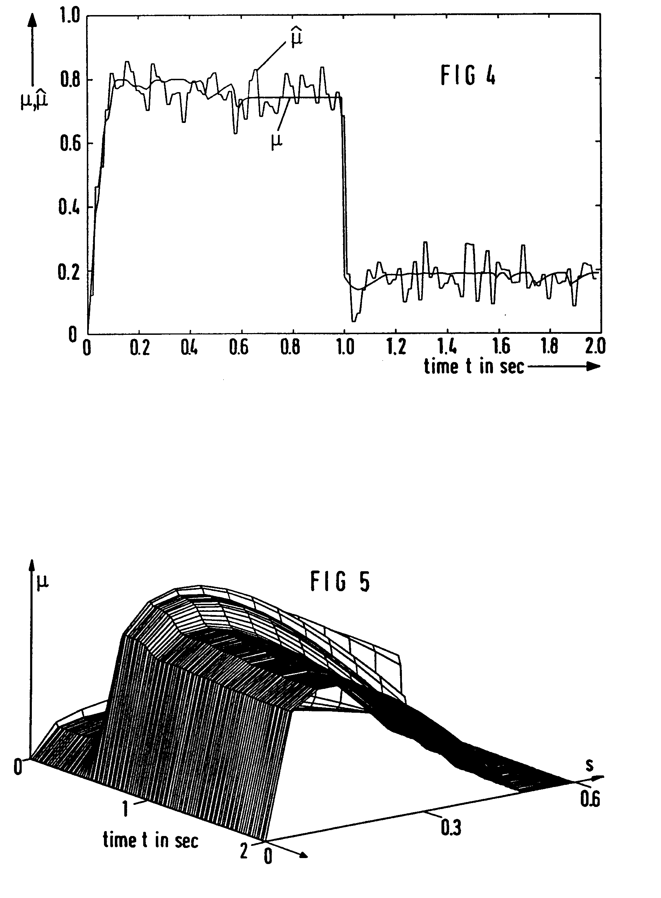

Aus dem Diagramm von Figur 4 ist ersichtlich, daß der mit dem vorstehenden Algorithmus ermittelte Schätzwert $\hat{\mu}$ des Reibwerts sehr gut einem vorgegebenen Reibwert $\mu$ folgt, der etwa zu dem Zeitpunkt t = 1 sec sprunghaft abnimmt, so wie es etwa dem Übergang von einer trockenen Asphaltfahrbahn auf eine vereiste Fahrbahn entspricht.

Für eine effektive ABS-Regelung ist die Kenntnis des Reibwerts als Funktion des Radschlupfes, d.h. der Reibcharakteristik erforderlich. In der Literatur ist für diese Abhängigkeit folgende Funktion vorgeschlagen worden.

$$\mu(s)=C_1(1-e^{c_2 s})-c_3 s \quad (14)$$

Sie weist aber den gravierenden Nachteil auf, daß sie zu nichtlinearen Schätzalgorithmen führt. Hier wird deshalb eine Näherungsgleichung verwendet

$$\mu(s)=As+B\sqrt{s}, \quad (15)$$

die folgenden linearen Schätzalgorithmus ergibt:

$$\mu(n)=As(n)+B\sqrt{s(n)} , \quad (16),$$

worin A und B Parameter einer Kurve sind, mit welcher der zu ermittelte Reibwert approximiert wird. Sie werden von den als Vektor

$$\underline{b}^T =[AB]$$

dargestellten Kurvenparametern A und B, von den als Datenvektor

$$\underline{X}^T =[s\sqrt{s}]$$

dargestellten Meßwerten des Radschlupfes s und von dem wie weiter oben beschrieben ermittelten Reibwert $\hat{\mu}(n)$ abgeleitet. Die Berechnung des Prädiktionswertes für die Reibcharakteristik wird mit nachfolgenden Gleichungen durchgeführt

$$\mu(n)=\underline{X}^T(n) \cdot \underline{b}(n)$$

$$\underline{b}(n)=\underline{b}(n-1)+\underline{k}(n)(\mu(n)-\underline{X}^T(n)\hat{\underline{b}}(n-1))$$

$$\underline{k}(n)=P(n-1)\underline{X}(n)(1+\underline{X}^T(n)P(n-1)\underline{X}(n))^{-1}$$

Ein Schätzwert $\mu(n)$ für den Prädiktionszeitpunkt $n$ wird aus den Meßergebnissen zu dem Zeitpunkt n-1 ermittelt. Ein neuer Schätzwert $\hat{\underline{b}}(n)$ zum Zeitpunkt n wird entsprechend aus dem Schätzwert zu dem Zeitpunkt n-1 berechnet. Ein Vektor $k(n)$ zum Zeitpunkt n wird ebenfalls aus den Werten zum Zeitpunkt n-1 berechnet. Dieser Vektor wird in der Literatur auch als Kalmanscher Verstärkungsfaktor bezeichnet. Die in ihm enthaltene Kovarianz-Matrix $P(n-1)$ wird mit der Gleichung

$$P(n)=10^{q} \cdot |\mu(n)-\underline{X}^T(n)\hat{\underline{b}}(n)|^2 \cdot I \quad (18)$$

berechnet, allerdings mit den Abtastwerten vom Zeitpunkt n-1. Sie hängt vom Schätzfehler ab. I ist hier die Einheitsmatrix.

Das hier zugrunde gelegte Modell gemäß Gleichung (15) führt - wie auch aus dem Diagramm von Figur 5 ersichtlich ist - zu guten Ergebnissen, wenn Einschränkungen für den Ort des Kurvenmaximums zugelassen werden. Die größeren Abweichungen nach dem Maximum können toleriert werden, da moderne Antiblockiersysteme in diesem Bereich nicht arbeiten.

Ein wahlweise hier verwendetes Modell der Reibcharakteristik

$$\mu(s)=\frac{s}{A+Bs+Cs^2} \qquad (19)$$

verwendet drei Parameter A, B und C, die eine gute Approximation für den Reibwert über den ganzen Radschlupfbereich ergeben. Die Ausgangssteigung der Kurve $\mu(s)$ ist

$$\dot{\mu}(0)=1/A \qquad (20)$$

und das Maximum des Reibwerts beträgt

$$\mu_{max}=\mu(s_0)=\frac{\sqrt{A/C}}{(2A+B\sqrt{A/C})} , \qquad (21)$$

und zwar bei einem Wert $s_0$ des Radschlupfes

$$s_0=\sqrt{A/C} . \qquad (22)$$

Ein Modell der Reibcharakteristik nach einer Beziehung

$$y(s)=\frac{s}{\mu(s)}=A+Bs+Cs^2 \qquad (23)$$

ergibt ebenfalls einen linearen Schätzalgorithmus.

Der beschriebene Schätzalgorithmus minimiert das Fehlerquadrat des Schätzfehlers. Vorteilhaft ist, daß alle bisherigen Meßwerte in die aktuelle Schätzung eingehen, womit für die Schätzung mehr Information zur Verfügung steht. Dadurch können Fehler der Radaufstandskraftschätzung besser als mit bekannten Verfahren kompensiert werden.

**Patentansprüche**

1. Verfahren zum Ermitteln des Reibwerts zwischen einem Kraftfahrzeugreifen und der Oberfläche einer Fahrbahn, bei dem die Fahrzeuggeschwindigkeit, die Drehbeschleunigung eines Fahrzeugrades und der Bremsdruck ermittelt, daraus der Radschlupf berechnet und aus diesen Werten der Reibwert mit einem Schätzalgorithmus ermittelt wird, **dadurch gekennzeichnet**,

- daß die Abhängigkeit des Reibwertes von dem Radschlupf ( $\mu = \mu(s)$ ) durch eine Näherungsgleichung approximiert wird, die einen linearen Schätzalgorithmus ergibt, und
- daß ein aktueller Schätzwert für den Reibbeiwert ($\mu$) mit einem rekursiven Schätzalgorithmus aus den Meßwerten des jeweils vorherigen Meßzeitpunktes ermittelt wird.

2. Verfahren nach Anspruch 1, dadurch gekennzeichnet, daß der Reibbeiwert ($\mu$) mit folgender Näherungsgleichung approximiert wird: $\mu(s)=As+B\sqrt{s}$, worin A und B Parameter für die Approximation sind.

3. Verfahren nach Anspruch 1, dadurch gekennzeichnet, daß der Reibbeiwert ($\mu$) mit folgender Näherungsgleichung approximiert wird:

$$\mu(s)=\frac{s}{A+Bs+Cs^2} ,$$

worin A, B und C Parameter für die Approximation sind.

4. Verfahren nach Anspruch 1, dadurch gekennzeichnet, daß der Reibwert ($\mu$) mit folgendem rekursiven Schätzalgorithmus ermittelt wird:

$$\hat{\mu}(n)=\hat{\mu}(n\text{-}1)+k(n)(y(n)\text{-}X^*\hat{\mu}(n\text{-}1)) ,$$

worin

$$y(n)=\frac{\omega_R(n)\text{-}\omega_R(n\text{-}1)}{T_A}+\frac{\mu_B A_B r_B}{\Theta_R}p_B(n)$$

eine aus den Meßwerten gebildete Variable,

$$X = \frac{m_A g r_R}{\Theta_R}$$

ein Fahrzeugparameter,

$$k(n)=\frac{1}{1+X^2 P(n\text{-}1)}X^* P(n\text{-}1)$$

ein Verstärkungsfaktor für die Fehlerrückführung und $P(n\text{-}1)=10^q*(y(n\text{-}1)\text{-}X^*\hat{\mu}(n\text{-}1))^2$ die Kovarianz des Schätzfehlers zum Meßzeitpunkt n-1 sind.

**5.** Verfahren nach Anspruch 4, dadurch gekennzeichnet, daß der Reibwert auf der Grundlage eines Modells $\mu(s)= As + B\sqrt{s}$ ermittelt wird, worin A und B Kurvenparameter mit der Vektordarstellung $\underline{b}^T=[AB]$ sind, die aus den gemessenen Radschlupfwerten mit der Vektordarstellung $\underline{X}^T=[s\sqrt{s}]$ und aus dem ermittelten Reibwert μ(n-1) berechnet werden, und daß ein neuer Reibwert μ(n) mit folgendem Schätzalgorithmus ermittelt wird:

$$\mu(n)=\underline{X}^T(n)*\underline{b}(n) \text{ , worin}$$

$$\hat{\underline{b}}(n)=\underline{b}(n\text{-}1)+\underline{k}(n\text{-}1)(\mu(n)\text{-}\underline{X}^T(n)\hat{\underline{b}}(n\text{-}1)) \text{ ,}$$

$$\underline{k}(n)=P(n\text{-}1)\underline{X}(n)(1+\underline{X}^T(n)P(n\text{-}1)\underline{X}(n))^{-1} \text{ und}$$

$$P(n\text{-}1)=10^{q*}|\mu(n\text{-}1)\text{-}\underline{X}^T(n\text{-}1)\underline{b}(n\text{-}1)|^{2*}I \text{ sind.}$$

**6.** Verfahren nach Anspruch 1, dadurch gekennzeichnet, daß der Reibwert (μ(s)) auf der Grundlage eines Modells

$$\mu(s)=\frac{s}{A+Bs+Cs^2}$$

ermittelt wird, worin A, B und C Parameter für die Approximation sind.

**7.** Verfahren nach Anspruch 5, dadurch gekennzeichnet, daß der ermittelte Reibwert (μ) zum Steuern eines Antiblockiersystems (ABS) oder eines Schlupfregelsystems verwendet wird.

**8.** Schaltungsanordnung zum Ermitteln des Reibwerts zwischen einem Kraftfahrzeugreifen und der Oberfläche einer Fahrbahn gemäß einem Verfahren nach einem der vorstehenden Ansprüche, die versehen ist mit Sensoren (24), durch welche die Fahrzeuggeschwindigkeit, die Drehgeschwindigkeit eines Rades (2-5) und ein weiterer Fahrparameter erfaßt werden, sowie mit einer Auswerteschaltung (20), durch welche die Sensorsignale ausgewertet, aus der Drehgeschwindigkeit die Winkelbeschleunigung des Rades (2-5) berechnet und aus von den Sensoren (24) erfaßten Fahrparametern der Reibwert berechnet wird, **dadurch gekennzeichnet,**

- daß durch die Sensoren (24) der Bremsdruck (p) an einem Rad laufend gemessen wird, und
- daß in der Auswerteschaltung (20):

  -- die Abhängigkeit des Reibwertes von dem Radschlupf (μ = μ(s)) durch eine Näherungsgleichung approximiert wird, die einen linearen Schätzalgorithmus ergibt,

  -- und

  -- der Reibwert (μ) mit einem rekursiven Schätzalgorithmus aus den Meßwerten des jeweiligen vorhergehenden Meßzeitpunktes der Winkelbeschleunigung und des Bremsdrucks ermittelt wird.

**9.** Schaltungsanordnung nach Anspruch 8, dadurch gekennzeichnet, daß sie zum Regeln eines Antiblockiersystems (ABS) oder eines Schlupfregelsystems verwendet wird.

**Claims**

**1.** Method for determining the coefficient of friction between a motor vehicle tyre and the surface of a roadway, in which the vehicle speed, the rotational acceleration of a vehicle wheel and the braking pressure are determined, the wheel slip is calculated therefrom and from these values the coefficient of friction is determined by means of an estimation algorithm, characterized

- in that the dependence of the coefficient of friction on the wheel slip ( μ = μ(s) ) is approximated by an approximation equation which yields a linear estimation algorithm, and
- in that a current estimation value of the coefficient of friction (μ) is determined by means of a recursive estimation algorithm from the measured values of the respectively preceding measuring instant.

**2.** Method according to Claim 1, characterized in that the coefficient of friction (μ) is approximated by means of the following approximation equation:

$$\mu(s)=As+B\sqrt{s},$$

wherein A and B are parameters for the approximation.

**3.** Method according to Claim 1, characterized in that the coefficient of friction (μ) is approximated by means of the following approximation equation:

$$\mu(s)=\frac{s}{A+Bs+Cs^2} \text{ ,}$$

wherein A, B and C are parameters for the approximation.

4. Method according to Claim 1, characterized in that the coefficient of friction ($\mu$) is approximated by means of the following recursive estimation algorithm: $\hat{\mu}(n)=\hat{\mu}(n\text{-}1)+k(n)(y(n)\text{-}X^*\hat{\mu}(n\text{-}1))$, wherein

$$y(n)=\frac{\omega_R(n)-\omega_R(n\text{-}1)}{T_A}+\frac{\mu_B A_B r_B}{\theta_R}p_B(n)$$

is a variable formed from the measured values,

$$X=\frac{m_A g r_R}{\theta_R}$$

is a vehicle parameter,

$$k(n)=\frac{1}{1+X^2 P(n\text{-}1)}X^*P(n\text{-}1)$$

is an amplification factor for the error feedback, and $P(n\text{-}1)=10^{q}{}^*(y(n\text{-}1)\text{-}X^*\hat{\mu}(n\text{-}1))^2$ is the covariance of the estimation error at the measuring instant n-1.

5. Method according to Claim 4, characterized in that the coefficient of friction is determined on the basis of a model $\mu(s)=As+B\sqrt{s}$, wherein A and B are curve parameters with the vector representation $\underline{b}^T=[AB]$, which are calculated from the measured wheel slip values with the vector representation $\underline{X}^T=[s\sqrt{s}]$ and from the coefficient of friction $\mu(n\text{-}1)$ determined, and in that a new coefficient of friction $\mu(n)$ is determined by means of the following estimation algorithm:

$$\mu(n)=\underline{X}^T(n)^*\underline{b}(n), \text{ wherein}$$

$$\hat{\underline{b}}(n)=\underline{b}(n\text{-}1)+\underline{k}(n\text{-}1)(\mu(n)\text{-}\underline{X}^T(n)\hat{\underline{b}}(n\text{-}1)),$$

$$\underline{k}(n)=P(n\text{-}1)\underline{X}(n)(1+\underline{X}^T(n)P(n\text{-}1)\underline{X}(n))^{-1} \text{ and}$$

$$P(n\text{-}1)=10^{q}{}^*|\mu(n\text{-}1)\text{-}\underline{X}^T(n\text{-}1)\hat{\underline{b}}(n\text{-}1)|^2{}^*I.$$

6. Method according to Claim 1, characterized in that the coefficient of friction ($\mu(s)$) is determined on the basis of a model

$$\mu(s)=\frac{s}{A+Bs+Cs^2},$$

wherein A, B and C are parameters for the approximation.

7. Method according to Claim 5, characterized in that the coefficient of friction ($\mu$) determined is used to control an anti-skid system (ABS) or a traction control system.

8. Circuit arrangement for determining the coefficient of friction between a motor vehicle tyre and the surface of a roadway in accordance with a method according to one of the preceding claims, which circuit arrangement is provided with sensors (24) by means of which the vehicle speed, the rotational speed of a wheel (2-5) and a further driving parameter are detected, as well as with an evaluation circuit (20) by means of which the sensor signals are evaluated, the angular acceleration of the wheel (2-5) is calculated from the rotational speed, and the coefficient of friction is calculated from driving parameters detected by the sensors (24), characterized

- in that the braking pressure (p) at a wheel is continuously measured by the sensors (24), and
- in that in the evaluation circuit (20):

  -- the dependence of the coefficient of friction on the wheel slip ($\mu=\mu(s)$) is approximated by an approximation equation which yields a linear estimation algorithm,
  -- and
  -- the coefficient of friction ($\mu$) is determined by means of a recursive estimation algorithm from the measured values of the respectively preceding measuring instant of the angular acceleration and the braking pressure.

9. Circuit arrangement according to Claim 8, characterized in that it is used to control an anti-skid system (ABS) or a traction control system.

**Revendications**

1. Procédé pour déterminer le coefficient de frottement entre un pneumatique de véhicule automobile et la surface d'une route, selon lequel on détermine la vitesse du véhicule, l'accélération angulaire d'une roue du véhicule et la pression de freinage, on calcule à partir de là le glissement de roue et on détermine, à partir de ces valeurs, le coefficient de frottement à l'aide d'un algorithme d'estimation, caractérisé en ce

- qu'on approxime la dépendance du coefficient de frottement vis du glissement de roue ($\mu = \mu(s)$) au moyen d'une relation d'approximation, qui fournit un algorithme linéaire d'estimation, et

- qu'on détermine une valeur actuelle estimée du coefficient de frottement ($\mu$) au moyen d'un algorithme d'estimation récursif à partir des valeurs de mesure de l'instant de mesure respectivement précédent.

2. Procédé selon la revendication 1, caractérisé en ce qu'on approxime le coefficient de frottement ($\mu$) avec la relation d'approximation suivante : $\mu(s) = As + B\sqrt{s}$, A et B étant des paramètres pour l'approximation.

3. Procédé selon la revendication 1, caractérisé en ce qu'on approxime le coefficient de frottement ($\mu$) avec la relation suivante d'approximation :

$$\mu(s) = \frac{s}{A+Bs+Cs^2}$$

A, B et C étant des paramètres pour l'approximation.

4. Procédé selon la revendication 1, caractérisé en ce qu'on détermine le coefficient de frottement ($\mu$) avec l'algorithme d'estimation récursif suivant :

$$\hat{\mu}(n) = \hat{\mu}(n-1) + k(n)(y(n) - X^*\hat{\mu}(n-1)),$$

avec

$$y(n) = \frac{\omega_r(n) - \omega_r(n-1)}{T_A} + \frac{\mu_B A_B r_B}{\theta_R} p_B(n)$$

étant une variable formée à partir des valeurs de mesure,

$$X = \frac{m_A g r_R}{\theta_R}$$

étant un paramètre du véhicule,

$$k(n) = \frac{1}{1+X^2 P(n-1)} X^* P(n-1)$$

étant un facteur d'amplification pour le renvoi d'erreurs, et $P(n-1) = 10^q {}^*(y(n-1) - X^*\hat{\mu}(n-1))^2$ étant la covariance de l'erreur estimée à l'instant de mesure n-1.

5. Procédé selon la revendication 4, caractérisé en ce qu'on détermine le coefficient de frottement sur la base d'un modèle $\mu(s) = As + B\sqrt{s}$, A et B étant des paramètres d'une courbe avec la représentation vectorielle $\underline{b}^T = [AB]$, que l'on calcule à partir des valeurs mesurées du glissement de roue avec la représentation vectorielle $\underline{X}^T = [s\sqrt{s}]$ et à partir du coefficient de frottement $\mu(n-1)$ déterminé, et qu'on détermine un nouveau coefficient de frottement $\mu(n)$ avec l'algorithme d'estimation suivant :

$$\mu(n) = \underline{X}^T(n)^*\underline{b}(n), \text{ avec}$$

$$\hat{\underline{b}}(n) = \underline{b}(n-1) + \underline{k}(n-1)(\mu(n) - \underline{X}^T(n)\hat{\underline{b}}(n-1)),$$

$$\underline{k}(n) = P(n-1)\underline{X}(n)(1+\underline{X}^T(n)P(n-1)\underline{X}(n))^{-1} \text{ et}$$

$$P(n-1) = 10^{q*}|\mu(n-1) - \underline{X}^T(n-1)\hat{\underline{b}}(n-1)|^2 {}^*I.$$

6. Procédé selon la revendication 1, caractérisé en ce qu'on détermine le coefficient de frottement ($\mu(s)$) sur la base d'un modèle

$$\mu(s) = \frac{s}{A + Bs + Cs^2},$$

A, B et C étant des paramètres pour l'approximation.

7. Procédé selon la revendication 5, caractérisé en ce qu'on utilise le coefficient de frottement déterminé ($\mu$) pour commander un système d'antiblocage (ABS) ou un système de régulation du glissement.

8. Montage pour déterminer le coefficient de frottement entre un pneumatique de véhicule automobile et la surface d'une route conformément au procédé selon l'une des revendications précédentes, qui est équipé de capteurs (24), à l'aide desquels la vitesse du véhicule, la vitesse angulaire d'une roue (2-5) et un autre paramètre de conduite sont déterminés, et comportant un circuit d'évaluation (20), au moyen duquel les signaux des capteurs sont évalués, l'accélération angulaire de la roue (2-5) est calculée à partir de la vitesse de rotation, et le coefficient de frottement est calculé à partir de paramètres de conduite détectés par les capteurs (24), caractérisé en ce

- que la pression de freinage (p) au niveau d'une roue est mesurée en permanence par les capteurs (24), et
- que dans le circuit d'évaluation (20) :

  -- la dépendance du coefficient de frottement vis-à-vis du glissement de roue ($\mu = \mu(s)$) est approximé par une relation d'approximation, qui fournit un algorithme linéaire d'estimation,
  -- et

-- le coefficient de frottement (µ) est déterminé au moyen d'un algorithme récursif d'estimation à partir des valeurs de mesure de l'instant de mesure précédent respectif de l'accélération angulaire et de la pression de freinage.

9. Montage selon la revendication 8, caractérisé en ce qu'on l'utilise pour régler un système d'antiblocage (ABS) ou un système de régulation du glissement.

FIG 1

FIG 2

FIG 3

FIG 4

FIG 5